# FASCICULE DE BREVET EUROPEEN

(11) **EP 1 098 686 B1**
(45) Date de publication et mention de la délivrance du brevet: **02.05.2003**
(21) Numéro de dépôt: 99925104.4
(22) Date de dépôt: 15.06.1999
(51) Int. Cl.: A63F 13/04, A63F 13/06

(54) **PISTOLET DE TIR POUR JEU VIDEO**
SCHIESSPISTOLE FÜR VIDEOSPIEL
FIRING PISTOL FOR VIDEO GAME

(30) Priorité: 17.06.1998 FR 9807636
(43) Date de publication de la demande: 16.05.2001
(73) Titulaire: Guary, Gabriel, 75001 Paris (FR); Mercier, Emmanuel, 31860 Labarthe sur Leze (FR)
(72) Inventeur: GUARY, Gabriel, F-75001 Paris (FR)
(74) Mandataire: Burbaud, Eric
(86) Numéro de dépôt international: FR9901434
(87) Numéro de publication internationale: WO99065580

(56) Documents cités:
- EP-A- 0 835 676
- US-A- 5 394 168
- US-A- 5 583 407
- PATENT ABSTRACTS OF JAPAN vol. 096, no. 009, 30 septembre 1996 (1996-09-30) & JP 08 117437 A (NAMCO LTD), 14 mai 1996 (1996-05-14)

## Description

La présente invention concerne un pistolet pour un dispositif de tir pour jeu vidéo destiné à être utilisé par un joueur pour faire tirer un acteur virtuel sur au moins une cible virtuelle, l'acteur virtuel étant la représentation du joueur dans l'environnement de jeu. Plus particulièrement, ce pistolet est destiné à des jeux vidéo gérés par ordinateur dans lesquels le joueur doit tirer sur un cible intégrée à un défilement d'images.

Les pistolets couramment rencontrés par les utilisateurs sont rapportés dans des dispositifs comprenant :
- un système de visualisation qui permet d'afficher une image de jeu portant-ladite au moins une cible virtuelle ; et
- des moyens de traitement de jeu à microprocesseurs qui sont destinés à être connectés au système de visualisation pour gérer l'affichage de l'image du système de visualisation, le pistolet, destiné à être relié auxdits moyens de traitement, comprenant des moyens de déclenchement de tir sur ladite au moins une cible selon un axe de tir, qui sont activés par l'utilisateur pour transmettre aux moyens de traitement un ordre de tir en un instant défini par cet utilisateur, le déplacement dudit axe de tir par rapport à l'acteur virtuel étant provoqué par le mouvement du pistolet par rapport au système de visualisation sous l'action de l'utilisateur.

Ce type de pistolet permet uniquement au joueur de déplacer l'axe de tir de l'acteur virtuel afin de tirer sur une cible. En effet, le chemin suivi par cet acteur virtuel dans le jeu est imposé par les moyens de traitement en fonction du programme de jeu mémorisé.

Par conséquent, le champ visuel de l'acteur virtuel n'est pas choisi par le joueur. Le joueur ne peut donc pas choisir le déplacement de l'acteur virtuel dans son environnement, ce déplacement étant imposé par le jeu.

L'acteur virtuel ne peut tirer que sur des cibles qui lui sont présentées et ne peut pas partir à leur recherche.

Ce type de pistolet est donc frustrant pour le joueur puisqu'il n'est pas maître des évolutions de l'acteur virtuel dans le jeu.

Il est connu par les brevets EP O 835 676 A, US 5 583 407 A et JP 08 117437 A différents dispositifs de jeux vidéo. Par ailleurs, l'invention décrite dans le brevet US 5 394 168 A est une manette comportant un D-Switch et un pointeur optique permettant de contrôler et de déplacer simultanément deux objets visibles à l'écran.

La présente invention a pour but de remédier aux inconvénients précités et ce, par des moyens simples, efficaces et peu coûteux.

A cet effet, selon l'invention, le pistolet du type précité, est essentiellement caractérisé en ce qu'il comporte des moyens intégrés de commande du déplacement du champ de vision de l'acteur virtuel permettant à l'utilisateur de déplacer cet acteur virtuel dans son environnement de jeu et de faire tirer ledit acteur virtuel en un lieu et en un instant choisi par l'utilisateur.

Ainsi grâce à ces dispositions, le joueur est totalement libre de faire évoluer l'acteur virtuel dans le jeu pour se déplacer et tirer selon ses propres critères, et non plus seulement selon des conditions imposées par le jeu, telles que le trajet suivi par l'acteur virtuel. Il peut ainsi rechercher et faire apparaître à l'image une cible de l'environnement choisi et faire tirer l'acteur virtuel sur cette cible.

Le pistolet suivant l'invention peut éventuellement comporter en outre une ou plusieurs des caractéristiques suivantes :
- les moyens de commande du déplacement de l'acteur virtuel comprennent un organe de commande multidirectionnel intégré au pistolet ;
- l'organe de commande multidirectionnel permet le déplacement vers la gauche, la droite, en avant et en arrière de l'acteur virtuel ;
- l'organe de commande multidirectionnel est constitué de l'un des éléments parmi une manette, un joystick, une boule de commande et des touches directionnelles;
- le pistolet comporte un bouton de commutation des effets de l'organe de commande multidirectionnel qui permet un déplacement latéral de l'acteur virtuel vers la gauche ou la droite ;
- le bouton de commutation permet en outre à l'organe de commande multidirectionnel de provoquer un mouvement de tête de l'acteur virtuel;
- le pistolet comprend un système mécanique à déplacement de masse destiné à provoquer chez l'utilisateur une sensation de recul lors du tir ;
- les moyens de déclenchement du tir sur la cible comprennent une détente ;
- les moyens de traitement de jeu comprennent une console de jeu et le système de visualisation comprend une télévision ;
- les moyens de traitement de jeu comprennent un ordinateur et le système de visualisation comprend un écran d'ordinateur ;
- le système de visualisation est un système de visualisation de réalité virtuelle ;
- la projection de l'axe de tir sur le système de visualisation est matérialisée par une mire visible sur l'image de jeu ; et
- le pistolet est destiné à être physiquement relié aux moyens de traitement de jeu.

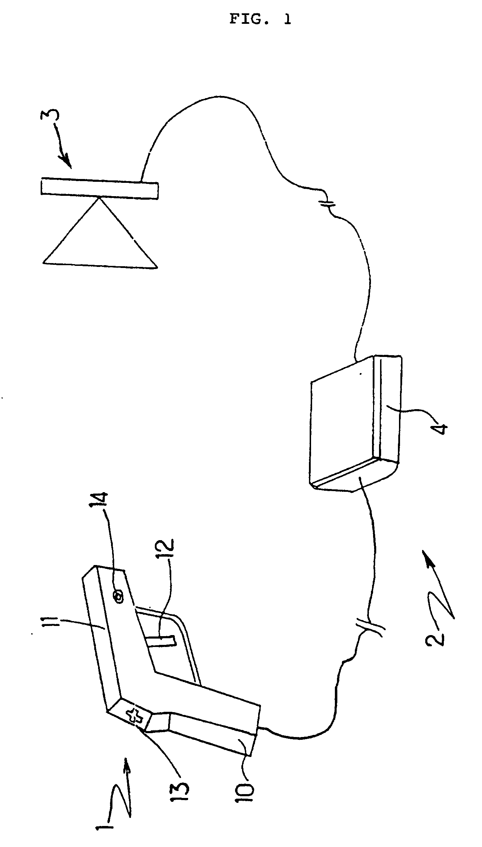

Un exemple de réalisation de l'invention va maintenant être décrit en regard de la figure unique sur laquelle est représenté schématiquement un pistolet selon la présente invention associé à un dispositif de jeu de tir.

La figure représente en perspective un pistolet de tir 1 selon la présente invention destiné à être relié à un dispositif de tir pour jeu vidéo 2.

Le dispositif de jeu vidéo 2 est destiné, de manière connue en soi, à être utilisé par l'utilisateur pour faire tirer un acteur virtuel sur une ou plusieurs cibles virtuelles défilant sur les images du jeu.

A cet effet, le dispositif de tir 2 est constitué d'un système de visualisation 3 et de moyens de traitement de jeux à microprocesseurs 4. Ces moyens de traitement 4 consistent par exemple en un ordinateur comprenant une mémoire dans laquelle est stocké un programme de jeu vidéo, en un système d'exploitation ainsi qu'une librairie. Cet ordinateur est destiné à être relié au système de visualisation 3 qui prend par exemple la forme d'un écran d'ordinateur sur lequel défilent les images du jeu vidéo comportant au moins une cible virtuelle. Ces images sont gérées par le programme de l'ordinateur.

En variante, les moyens de traitement de jeu 4 peuvent consister en une console reliée à un écran de télévision jouant le rôle de système de visualisation.

Dans une autre variante, le système de visualisation peut être remplacé par un système de réalité virtuelle, tel un casque ou des lunettes de réalité virtuelle.

Dans chacune de ces variantes, l'utilisateur représenté par l'acteur virtuel, se trouve situé devant le système de visualisation.

L'ordinateur est par ailleurs relié au pistolet 1 qui est constitué d'une crosse 10 supportant une carcasse 11 dotée d'une détente 12. La carcasse 11 définit un axe de tir.

Situés de préférence dans la zone de raccordement entre la crosse 10 et la carcasse 11, le pistolet 1 porte des moyens de commande 13 du déplacement de l'acteur virtuel par rapport à son environnement de jeu. Toutefois, ces moyens de commande du déplacement de l'acteur virtuel peuvent être placés sous le fut du pistolet, afin de pouvoir être actionnés par la main de l'utilisateur qui ne tient pas la crosse 10. Ces moyens prennent la forme d'un organe de commande multidirectionnel qui peut être soit une manette analogique, soit une manette digitale, ou bien encore la forme d'une boule de commande, d'un joystick ou de touches directionnelles.

Par ailleurs, au voisinage de la partie avant de sa carcasse 11, le pistolet 1 possède un bouton de commutation 14 permettant, par action de celui-ci, de donner une autre fonction à l'organe de commande multidirectionnel 13 comme cela sera décrit ci-après.

La détente 12 joue le rôle de moyen de déclenchement du tir sur la cible par pression de l'utilisateur sur celle-ci.

La librairie de l'ordinateur permet de reconnaître la position du pistolet 1 par rapport au système de visualisation 3 de façon à déterminer la position de la projection de l'axe de tir sur ledit système de visualisation. Ceci permet au système de déterminer l'emplacement du tir lorsque l'ordre de tir est donné par le joueur.

Ainsi, après avoir été activé par le joueur, le programme en mémoire dans l'ordinateur fait défiler sur le système de visualisation les images du jeu vidéo sur lesquelles l'acteur virtuel intervient, celui-ci voyant apparaître des cibles sur lesquelles il doit tirer.

Le joueur agit sur l'acteur virtuel par l'intermédiaire du pistolet qui permet simultanément de déplacer l'axe de tir par rapport à l'acteur virtuel et de commander le mouvement avant, arrière, gauche ou droite de cet acteur par rapport à son environnement.

Pour cela, le joueur déplace le pistolet pour l'orienter par rapport au système de visualisation et ainsi, pour une position donnée de l'acteur, déplacer l'axe de tir pour atteindre la cible que le joueur souhaite détruire.

Par ailleurs, l'organe de commande multidirectionnel 13 permet au joueur de mettre en mouvement l'acteur virtuel par rapport à son environnement de jeu. Cet organe comporte essentiellement quatre positions :
- lorsque le joueur désire que l'acteur virtuel se déplace en avant ou en arrière, il actionne l'organe vers le haut ou vers le bas respectivement,
- lorsque le joueur désire que l'acteur se déplace vers la gauche par rapport à son chemin initial, il actionne tout d'abord l'organe vers la gauche, cela a pour effet de provoquer la rotation de l'acteur vers la gauche, puis il actionne l'organe vers le haut pour que cet acteur se déplace vers l'avant par rapport à la nouvelle orientation définie,
- de même, lorsque le joueur désire déplacer vers la droite l'acteur virtuel, il actionne d'abord vers la droite l'organe de commande multidirectionnel, puis à nouveau vers le haut pour faire avancer l'acteur dans sa nouvelle direction.

Par action du joueur sur le bouton de commutation 14, toute commande sur l'organe multidirectionnel vers la gauche ou vers la droite permet de faire déplacer l'acteur virtuel latéralement vers la gauche ou vers la droite parallèlement à lui-même. Ce type de déplacement est équivalent à celui d'un pas chassé.

Ainsi, grâce au pistolet selon la présente invention, le joueur peut à la fois provoquer le déplacement de l'acteur virtuel dans toutes les directions par rapport à l'environnement, mais aussi de déplacer l'axe de tir après avoir sélectionné l'une des cibles placées dans le champ visuel dudit acteur. Le joueur peut donc à la fois déplacer l'acteur virtuel où il veut par rapport au jeu et tirer sur l'une des cibles qu'il aura choisie en un lieu quelconque de l'image.

En variante, le bouton de commutation 14 permet, par l'intermédiaire de l'organe de commande multidirectionnel 13, de provoquer un mouvement vers le haut ou vers le bas de la tête de l'acteur virtuel.

Afin d'améliorer encore le réalisme du jeu, le pistolet 1 peut posséder des moyens mécaniques dans lesquels se déplacent une ou plusieurs masses pour provoquer chez l'utilisateur, lorsqu'il tire, une sensation de recul.

Le joueur a en outre la possibilité de matérialiser la projection de l'axe de tir sur le système de visualisation par une mire visible sur les images du jeu.

Dans une autre variante encore, le pistolet 1 n'est pas physiquement relié à l'ordinateur par un câble, mais transmet les informations par des ondes.

Par ailleurs, l'implantation de l'organe de commande multidirectionnel 13 et du bouton poussoir 14 peut être autre que celle représentée en fonction de l'ergonomie du pistolet 1.

On comprend bien entendu que la forme du pistolet peut être différente, comme par exemple celle d'un fusil ou d'une mitraillette.

## Revendications

1. Pistolet (1) pour dispositif de tir pour jeu vidéo (2) destiné à être utilisé par un utilisateur pour faire tirer un acteur virtuel sur au moins une cible virtuelle, ce dispositif comprenant :
- un système de visualisation (3) qui permet d'afficher une image de jeu représentative du champ de vision de l'acteur virtuel, l'image de jeu portant ladite au moins une cible virtuelle ; et
- des moyens de traitement de jeu à microprocesseurs (4) qui sont destinés à être connectés au système de visualisation (3) pour gérer l'affichage de l'image du système de visualisation,
le pistolet (1), destiné à être relié auxdits moyens de traitement (4), comprenant, d'une part, des moyens de déclenchement (12) du tir sur ladite au moins une cible virtuelle selon un axe de tir, qui sont activés par l'utilisateur pour transmettre aux moyens de traitement (4) un ordre de tir en un instant défini par cet utilisateur, et d'autre part, des moyens destinés à provoquer un déplacement dudit axe de tir par rapport au champ de vision de l'acteur virtuel suivant le mouvement du pistolet (1) par rapport au système de visualisation (3) sous l'action de l'utilisateur, **caractérisé en ce que** le pistolet comporte en outre des moyens intégrés de commande du déplacement (13) du champ de vision de l'acteur virtuel permettant à l'utilisateur de déplacer cet acteur virtuel dans son environnement de jeu et de faire tirer ledit acteur virtuel en un lieu et un instant choisi par l'utilisateur.

2. Pistolet pour dispositif de tir selon la revendication 1, **caractérisé en ce que** les moyens de commande du déplacement (13) du champ de vision de l'acteur virtuel comprennent un organe de commande multidirectionnel.

3. Pistolet pour dispositif de tir selon la revendication 2, **caractérisé en ce que** l'organe de commande multidirectionnel (13) permet le déplacement vers la gauche, la droite, en avant et en arrière du champ de vision de l'acteur virtuel.

4. Pistolet pour dispositif de tir selon la revendication 2 ou 3, **caractérisé en ce que** l'organe de commande multidirectionnel (13) est constitué de l'un des éléments parmi une manette, un joystick, une boule de commande et des touches directionnelles.

5. Pistolet pour dispositif de tir selon la revendication 2, **caractérisé en ce que** le pistolet comporte un bouton de commutation (14) des effets de l'organe de commande multidirectionnel (13) qui permet un déplacement latéral du champ de vision de l'acteur virtuel vers la gauche ou la droite.

6. Pistolet pour dispositif de tir selon la revendication 2, **caractérisé en ce que** le pistolet comporte un bouton de commutation (14) qui permet à l'organe de commande multidirectionnel (13) de provoquer un mouvement de tête de l'acteur virtuel.

7. Pistolet pour dispositif de tir selon l'une quelconque des revendications 1 à 6, **caractérisé en ce qu'**il comprend un système mécanique à déplacement de masse destiné à provoquer chez l'utilisateur une sensation de recul lors du tir.

8. Pistolet pour dispositif de tir selon l'une quelconque des revendications 1 à 7, **caractérisé en ce que** les moyens de déclenchement du tir (12) sur la cible comprennent une détente.

9. Pistolet pour dispositif de tir selon l'une quelconque des revendications 1 à 8, **caractérisé en ce que** les moyens de traitement de jeu (4) comprennent une console de jeu et le système de visualisation comprend une télévision.

10. Pistolet pour dispositif de tir selon l'une quelconque des revendications 1 à 8, **caractérisé en ce que** les moyens de traitement de jeu (4) comprennent un ordinateur et le système de visualisation comprend un écran d'ordinateur.

11. Pistolet pour dispositif de tir selon la revendication 9 ou 10, **caractérisé en ce que** le système de visualisation est un système de .visualisation de réalité virtuelle.

12. Pistolet pour dispositif de tir selon l'une quelconque des revendications 1 à 11, **caractérisé en ce que** la projection de l'axe de tir sur le système de visualisation est matérialisée par une mire visible sur l'image de jeu.

13. Pistolet pour dispositif de tir selon l'une quelconque des revendications 1 à 12, **caractérisé en ce qu'**il est destiné à être physiquement relié aux moyens de traitement de jeu.

14. Dispositif de tir pour jeu vidéo (2) destiné à être utilisé par un utilisateur pour faire tirer un acteur virtuel sur au moins une cible virtuelle, le dispositif comprenant :
- des moyens de traitement de jeu à microprocesseurs (4) qui sont destinés à être connectés à un système de visualisation (3) pour générer sur le système de visualisation (3) l'affichage d'une image de jeu représentative du champ de vision de l'acteur virtuel, les moyens de traitement (4) générant une image portant ladite au moins une cible virtuelle ; et
- un pistolet selon l'une quelconque des revendications précédentes.

## Patentansprüche

1. Pistole (1) für eine Schießvorrichtung für ein Videospiel (2), die dazu ausgelegt ist, von einem Benutzer benutzt zu werden, der damit einen virtuellen Darsteller auf wenigstens ein virtuelles Ziel schießen lässt,
wobei diese Vorrichtung umfasst:
- ein Anzeigesystem (3), das die Darstellung eines Spielbildes ermöglicht, das das Sichtfeld des virtuellen Darstellers repräsentiert, wobei das Spielbild das wenigstens eine virtuelle Ziel enthält; und
- Spielverarbeitungsmittel (4) mit Mikroprozessoren, die zum Verbinden mit dem Anzeigesystem (3) ausgelegt sind, um die Bilddarstellung des Anzeigesystems zu steuern,
wobei die zum Verbinden mit den Verarbeitungsmitteln (4) ausgelegte Pistole (1) einerseits Mittel (12) zum Auslösen des Schusses entsprechend einer Schußachse auf das wenigstens eine virtuelle Ziel umfasst, die vom Benutzer aktiviert werden, um zu den Verarbeitungsmitteln (4) einen Schießbefehl in einem von diesem Benutzer bestimmten Augenblick zu übertragen, und andererseits Mittel, die zum Auslösen einer Verschiebung der Schußachse bezüglich des Sichtfeldes des virtuellen Darstellers entsprechend der Bewegung der Pistole durch den Benutzer bezüglich des Anzeigesystems (3) ausgelegt sind,
**dadurch gekennzeichnet, dass** die Pistole weiterhin integrierte Mittel (13) zum Steuern der Verschiebung des Sichtfeldes des virtuellen Darstellers umfasst, die es dem Benutzer ermöglichen, diesen virtuellen Darsteller in seiner Spielumgebung zu bewegen und diesen virtuellen Darsteller in einem vom Benutzer gewählten Augenblick auf eine Stelle schießen zu lassen.

2. Pistole für eine Schießvorrichtung nach Anspruch 1,
**dadurch gekennzeichnet, dass** die Mittel (13) zum Steuern der Verschiebung des Sichtfeldes des virtuellen Darstellers ein multidirektionales Steuerelement umfassen.

3. Pistole für eine Schießvorrichtung nach Anspruch 2,
**dadurch gekennzeichnet, dass** das multidirektionale Steuerelement (13) die Verschiebung des Sichtfeldes des virtuellen Darstellers nach links, nach rechts, nach vorne und nach hinten ermöglicht.

4. Pistole für eine Schießvorrichtung nach Anspruch 2 oder 3,
**dadurch gekennzeichnet, dass** das multidirektionale Steuergerät (13) von einem der folgenden Elemente gebildet ist: einem Stellhebel, einem Joystick, einer Steuerkugel, Richtungstasten.

5. Pistole für eine Schießvorrichtung nach Anspruch 2,
**dadurch gekennzeichnet, dass** die Pistole einen Knopf (14) zum Umschalten der Effekte des multidirektionalen Steuerelements (13) hat, welcher eine seitliche Verschiebung des Sichtfeldes des virtuellen Darstellers nach links oder rechts ermöglicht.

6. Pistole für eine Schießvorrichtung nach Anspruch 2,
**dadurch gekennzeichnet, dass** die Pistole einen Umschaltknopf (14) umfasst, der es dem multidirektionalen Steuerelement (13) ermöglicht, eine Kopfbewegung des virtuellen Darstellers auszulösen.

7. Pistole für eine Schießvorrichtung nach einem der Ansprüche 1 bis 6,
**dadurch gekennzeichnet, dass** sie ein mechanisches System zur Massenverschiebung umfasst, dass dazu ausgelegt ist, beim Benutzer beim Schießen ein Rückstoßgefühl auszulösen.

8. Pistole für eine Schießvorrichtung nach einem der Ansprüche 1 bis 7,
**dadurch gekennzeichnet, dass** die Mittel (12) zum Auslösen des Schusses auf das Ziel einen Abzug umfassen.

9. Pistole für eine Schießvorrichtung nach einem der Ansprüche 1 bis 8,
**dadurch gekennzeichnet, dass** die Spielverarbeitungsmittel (4) eine Spielekonsole umfassen und das Anzeigesystem einen Fernseher umfasst.

10. Pistole für eine Schießvorrichtung nach einem der Ansprüche 1 bis 8,
**dadurch gekennzeichnet, dass** die Spielverarbeitungsmittel (4) einen Computer umfassen und das Anzeigesystem einen Computerbildschirm umfasst.

11. Pistole für eine Schießvorrichtung nach einem der Ansprüche 9 oder 10,
**dadurch gekennzeichnet, dass** das Anzeigesystem ein Anzeigesystem zur Anzeige der virtuellen Realität ist.

12. Pistole für eine Schießvorrichtung nach einem der Ansprüche 1 bis 11,
**dadurch gekennzeichnet, dass** die Darstellung der Schußachse auf dem Anzeigesystem durch eine auf dem Spielbild sichtbare Schußlinie erfolgt.

13. Pistole für eine Schießvorrichtung nach einem der Ansprüche 1 bis 12,
**dadurch gekennzeichnet, dass** sie dazu ausgelegt ist, physisch mit den Spielverarbeitungsmitteln verbunden zu werden.

14. Schießvorrichtung für ein Videospiel (2), die dazu ausgelegt ist, von einem Benutzer benutzt zu werden, der damit einen virtuellen Darsteller auf wenigstens ein virtuelles Ziel schießen lässt, wobei die Vorrichtung umfasst:
- Spielverarbeitungsmittel (4) mit Mikroprozessoren, welche dazu ausgelegt sind, mit einem Anzeigesystem (3) verbunden zu werden, um auf dem Anzeigesystem (3) die Darstellung eines Spielbildes zu erzeugen, das das Sichtfeld des virtuellen Darstellers repräsentiert, wobei die Verarbeitungsmittel (4) ein Bild erzeugen, das das wenigstens eine virtuelle Ziel enthält; und
- eine Pistole nach einem der vorhergehenden Ansprüche.

## Claims

1. Pistol (1) for a video game shooting system (2) intended to be used by a player to enable a virtual actor to shoot at at least one virtual target, this system comprising:
- a display system (3) which can display an image of the video game representative of a viewing field of the virtual actor, the image of the game incorporating said at least one virtual target; and
- game processing means with microprocessors (4) which are intended to be connected to the display system (3) to control the image on the display system,
the pistol (1), intended to be connected to the game processing means (4), comprising, firstly, means of triggering shots (12) on said at least one virtual target following a shooting axis, which are activated by the user to send a shooting instruction to the game processing means (4) at an instant chosen by the player, and secondly, means intended to cause a displacement of the shooting axis relative to the viewing field of the virtual actor following the movement of the pistol (1) due to the user's action relative to the display system (3),
**characterized in that** the pistol further includes integrated means (13) to control the movement of the viewing field of the virtual actor, enabling the player to move this virtual actor in the game environment and to shoot in a location and at a moment chosen by the player.

2. Pistol for shooting system according to claim 1, **characterized in that** the means to control the movements (13) of the viewing field of the virtual actor comprise a multidirectional control device.

3. Pistol for shooting system according to claim 2, **characterized in that** the multidirectional control device (13) enables the player to move the viewing field of the virtual actor left, right forward and back.

4. Pistol for shooting system according to claim 2 or 3 **characterized in that** the multidirectional control device (13) is composed of one of the following elements among a control pad, a joystick, a trackball and directional buttons.

5. Pistol for shooting system according to claim 2, **characterized in that** the pistol includes a switching button (14) which switches the effects of the multidirectional control device and enables a lateral movement of the viewing field of the virtual actor to the left or to the right.

6. Pistol for a shooting system according to claim 2, **characterized in that** the pistol comprises a switching button (14) which enables the multidirectional control device (13) to cause a movement of the virtual actor's head.

7. Pistol for shooting system according to any one of claims 1 to 6, **characterized in that** it comprises a mechanical system with a mobile mass intended to simulate recoil when the user is shooting.

8. Pistol for shooting system according to any one of claims 1 to 7, **characterized in that** the means of triggering shots (12) on the target comprise a trigger.

9. Pistol for shooting system according to any one of claims 1 to 8, **characterized in that** the game processing means (4) comprise a game console and the display system comprises a television set.

10. Pistol for shooting system according to any one of claims 1 to 8 **characterized in that** the game processing means (4) comprise a computer and the display system comprises a monitor.

11. Pistol for shooting system according to claim 9 and 10 **characterized in that** the display system is a virtual reality display system.

12. Pistol for shooting system according to any one of claims 1 to 11, **characterized in that** the projection of the shooting axis on the display system is represented by visible cross hairs on the game image.

13. Pistol for shooting system according to any one of claim 1 to 12, **characterized in that** the pistol is intended to be physically connected to the game processing means.

14. Video game shooting system (2) intended to be used by a player to enable a virtual actor to shoot at at least one virtual target, the system comprising:
- game processing means with microprocessors (4) which are intended to be connected to a display system (3) for generating on the display system (3) an image of the game representative of a viewing field of the virtual actor, the processing means (4) generating an image incorporating said at least one virtual target; and
- a pistol according to any one of the preceding claims.
